# EUROPÄISCHE PATENTSCHRIFT

(11) **EP 2 077 203 B1**
(45) Veröffentlichungstag und Bekanntmachung des Hinweises auf die Patenterteilung: **18.07.2012**
(21) Anmeldenummer: 08016326.4
(22) Anmeldetag: 17.09.2008
(51) Int. Cl.: B60N 3/10

(54) **Halter für einen Getränkebehälter**
Holder for a drinks container
Support de réservoir de boissons

(30) Priorität: 24.10.2007 DE 102007050787
(43) Veröffentlichungstag der Anmeldung: 08.07.2009
(73) Patentinhaber: fischer automotive systems GmbH & Co. KG, 72160 Horb (DE)
(72) Erfinder: Kämmer, Hartwig, 72178 Waldachtal (DE)

(56) Entgegenhaltungen:
- WO-A-98/41421
- DE-A1- 10 121 979
- GB-A- 2 425 293
- US-A- 3 749 466
- US-B1- 6 250 527

## Beschreibung

Die Erfindung betrifft einen Halter für einen Getränkebehälter mit den Merkmalen des Oberbegriffs des Anspruchs 1.

Ein derartiger Halter, der zum Einbau in einen Kraftwagen vorgesehen ist, ist bekannt aus der EP 800 954 A2. Der bekannte Halter weist eine zylindrische oder rohrförmige Behälteraufnahme zum Einstellen des Getränkebehälters auf, wobei die Form der Behälteraufnahme nicht zwingend für die Erfindung ist. In einer Wand der Behälteraufnahme ist eine Haltebacke mit einer Schwenklagerung schwenkbar gelagert, die von einem Federelement in die Behälteraufnahme hinein beaufschlagt wird. Beim Einstellen drückt ein Getränkebehälter die Haltebacke gegen eine Federkraft des Federelements nach außen. Das Federelement drückt die Haltebacke nach innen gegen den Umfang des eingestellten Getränkebehälters und passt den Halter so an einen Durchmesser des Getränkebehälters an.

Die Schwenklagerung der Haltebacke des bekannten Halters weist ein Zapfenlager auf. Von der Haltebacke stehen beidseitig gleichachsig zwei Lagerzapfen ab, die in außen offenen Aufnahmen der Behälteraufnahme einliegen. "Außen" bezieht sich auf die Behälteraufnahme und meint auf einer der Behälteraufnahme abgewandten Seite. Der Mindestabstand der Schwenkachse des Zapfenlagers von einer Innenseite einer Wand der Behälteraufnahme ist die Wanddicke der Behälteraufnahme und der Radius der Lagerzapfen. Wünschenswert ist die Lagerachse der Schwenklagerung der Haltebacke bzgl. der Behälteraufnahme soweit wie möglich innen anzuordnen, weil dadurch ein Moment, das ein Getränkebehälter beim Einstellen in die Behälteraufnahme auf die Haltebacke ausübt, am größten ist. Das beim Einstellen vom Getränkebehälter auf die Haltebacke ausgeübte Moment ist nach außen entgegen der Federkraft des Federelements gerichtet und drückt die Haltebacke nach außen, so dass der Getränkebehälter in die Behälteraufnahme eingestellt werden kann.

Zudem ist aus der Offenlegungsschrift GB 2 425 293 A ein oben offener Halter, der dem Oberbegriff des Anspruchs 1 entspricht, bekannt, dessen Behälteraufnahme mehrere bügelförmige Haltebacken aufweist. Bei dem in den Figuren 5 und 6 dieser Druckschrift offenbarten Halter sind die Haltebacken schwenkbar gelagert, so dass sie ein Stück weit in die Behälteraufnahme hinein schwenkbar sind. Die Schwenklagerung der Haltebacken weist ein Schneidenlager für die Haltebacke auf. Dabei wirken die Haltebacken selbst als Federelement, das die Haltebügel in die Behälteraufnahme hinein beaufschlagt.

Aufgabe der Erfindung ist daher, einen Halter für einen Getränkebehälter der vorstehend erläuterten Art vorzuschlagen, dessen Schwenklagerung eine Schwenkachse an oder möglichst nahe an einer Innenseite einer Wand einer Behälteraufnahme des Halters ermöglicht.

Diese Aufgabe wird erfindungsgemäß durch die Merkmale des Anspruchs 1 gelöst. Die Schwenklagerung des erfindungsgemäßen Halters weist ein Schneidenlager auf. Schneidenlager sind in Waagen oder Messgeräten gebräuchlich. Sie weisen eine - normalerweise gerade - Kante auf, die als Schneide bezeichnet wird und die die Lagerachse definiert. Für die Erfindung kommt es weder auf eine örtlich genaue Lagerachse noch auf niedrige Reibung an, die Schneide des Schneidenlagers benötigt weder eine enge Toleranz noch muss sie scharfkantig, sondern kann beispielsweise auch gerundet sein. Das Schneidenlager ermöglicht, die Schwenkachse an der Innenseite der Wand der Behälteraufnahme des Halters oder jedenfalls mit kleinem Abstand von der Innenseite der Wand der Behälteraufnahme nach außen versetzt anzuordnen, ohne dass Bauteile oder Elemente des Lagers nach innen über die Innenseite der Wand der Behälteraufnahme vorstehen.

Die Erfindung sieht vor, dass der Halter eine Lasche aufweist, an deren freiem Stirnende sich das Schneidenlager befindet. Es kann eine Stirnfläche der Lasche die Schneide bilden, die Schneide kann am freien Stirnende der Lasche oder an der Haltebacke ausgebildet sein. Eine Weiterbildung der Erfindung sieht eine Stufe der Haltebacke vor, mit der die Haltebacke schwenkbar auf dem freien Stirnende der Lasche aufsitzt. Diese Ausgestaltung der Erfindung ermöglicht konstruktiv einfach und preisgünstig die Ausbildung des Schneidenlagers und ermöglicht die Schwenkachse an oder nahe der Innenseite der Wand der Behälteraufnahme. Die Lasche kann sich in einer Ebene mit der Wand der Behälteraufnahme befinden, so dass das Schneidenlager keine in die Behälteraufnahme vorstehende Teile aufweist.

Die Schwenkachse des Schneidenlagers befindet sich bei einer Ausgestaltung der Erfindung in der Wand der Behälteraufnahme möglichst nahe an der Innenseite. Die Schwenkachse verläuft tangential zur Behälteraufnahme, die Haltebacke ist "stehend" angeordnet, die Schwenkachse befindet sich In einem unteren Bereich der Haltebacke.

Eine Ausgestaltung der Erfindung sieht eine unten offene Aufnahme des Halters für die Haltebacke vor. "Unten" bezieht sich auf eine vorgesehene Einbaulage des Halters. Die Aufnahme ist auf einer Außenseite der Behälteraufnahme angeordnet und übergreift die Haltebacke, beispielsweise einen seitlich abstehenden Zapfen der Haltebacke, auf der Außenseite. Die Aufnahme sichert die Haltebacke von außen, so dass die Haltebacke nicht nach außen vom Schneidenlager freikommt. Die Aufnahme hält die Stufe der Haltebacke schwenkbar auf dem freien Stirnende der Lasche und sichert die Schwenklagerung gegen Lösen. Dadurch dass die Aufnahme unten offen ist, lässt sich die Haltebacke von unten, also entgegen der Einstellrichtung eines Getränkebehälters, entlang der Außenseite der Wand der Behälteraufnahme in die Aufnahme für die Haltebacke einbringen. Eine Montagerichtung der Haltebacke ist von unten nach oben entlang einer Außenseite der Wand der Behälteraufnahme. Die Haltebacke eignet sich dadurch für eine automatisierte Montage, die Montage ist eine einfache, translatorische Bewegung. Weiterer Vorteil der Erfindung ist die Montierbarkeit der Haltebacke an einem doppelwandigen Halter, bei dem die Behälteraufnahme von einer Wand, Blende oder dgl. umgeben oder jedenfalls teilweise abgedeckt ist. Die Haltebacke lässt sich von unten in einen Zwischenraum zwischen der Behälteraufnahme und der sie umgebenden Wand, Blende oder dgl. einbringen. Das ermöglicht eine einstückige Herstellung der Behälteraufnahme mit einer sie umschließenden Wand, nach außen abdeckenden Blende oder dgl.

Eine Ausgestaltung der Erfindung sieht vor, dass die Aufnahme für die Haltebacke und die Lasche einstückige Bestandteile der Behälteraufnahme sind und dass die Lasche eine Federlasche ist, die bei der Montage der Haltebacke an der Stufe der Haltebacke einschnappt. Außer der Haltebacke und der Behälteraufnahme sind keine weiteren Einzelteile erforderlich. Die Montage ist eine einfache translatorische Bewegung bis zum Einschnappen der Lasche, weitere Montageschritte entfallen.

Eine bevorzugte Ausgestaltung der Erfindung sieht vor, dass die Haltebacke und das Federelement eine vormontierbare Baugruppe bilden. Separate Montageschritte für das Federelement entfallen.

Weitere Merkmale der Erfindung ergeben sich aus der folgenden Beschreibung eines Ausführungsbeispiels in Verbindung mit den Ansprüchen und der Zeichnung. Die einzelnen Merkmale können je für sich oder zu mehreren in beliebiger Kombination bei Ausführungsformen der Erfindung verwirklicht sein. Es müssen nicht alle Merkmale eines Anspruchs in einer Ausführungsform der Erfindung verwirklicht sein. Die Aufgabenstellung kann sich mit Änderung der Ansprüche ändern.

Die Erfindung wird nachfolgend anhand eines in der Zeichnung dargestellten Ausführungsbeispiels näher erläutert. Es zeigen:
- Figur 1: eine perspektivische Darstellung eines Halters gemäß der Erfindung;
- Figur 2: einen vergrößerten Schnitt durch eine Haltebacke des Halters aus Figur 1;
- Figur 3: eine perspektivische Darstellung des Halters aus Figur 1 im Bereich der Haltebacke;
- Figur 4: eine Haltebacke des Halters aus Figur 1 als Einzelteil in perspektivischer Darstellung;
- Figur 5: den Halter aus Figur 1 im Bereich einer Haltebacke ohne diese; und
- Figur 6: ein Federelement der Haltebacke des Halters aus Figur 1 in perspektivischer Darstellung.

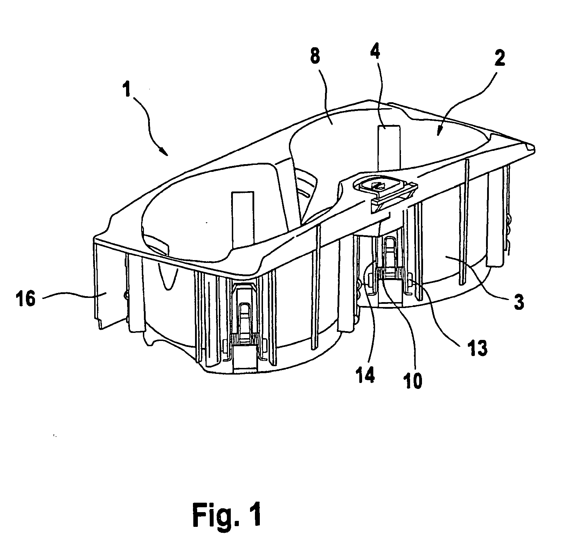

Der in Figur 1 dargestellte Halter 1 ist zum Einbau in einen nicht dargestellten Kraftwagen vorgesehen und dient zum Einstellen und kippsicheren Halten eines nicht dargestellten Getränkebehälters wie beispielsweise einer Getränkedose, eines Bechers, einer Tasse oder einer Flasche. Der Halter 1 weist zwei nebeneinander angeordnete, rohrförmige und oben offene Behälteraufnahmen 2 zum Einstellen jeweils eines Getränkebehälters auf. In einer rohrförmigen Wand 3 der Behälteraufnahmen 2 sind jeweils vier federbeaufschlagte Haltebacken 4 um 90° in Umfangsrichtung zueinander versetzt angeordnet. Die Wand 3 weist dazu entsprechende Aussparungen auf. Die Haltebacken 4 sind stehend angeordnet, d. h. sie erstrecken sich von unten nach oben. Die Angaben "unten" und "oben" beziehen sich auf eine vorgesehene Einbaulage des Halters 1.

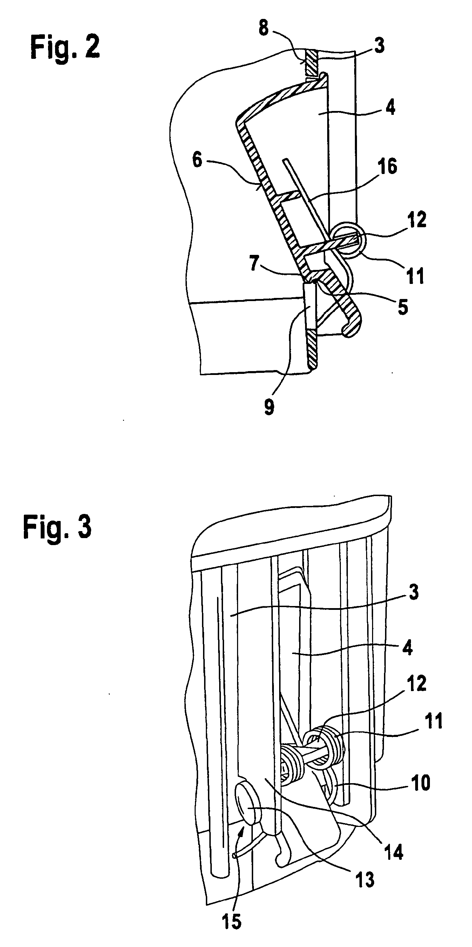

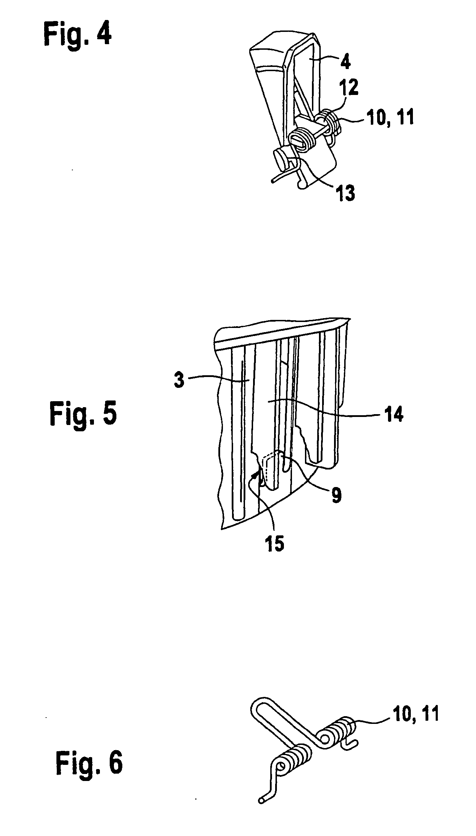

in Seitenansicht sind die Haltebacken 4 keilförmig (Figuren 2 und 4) und weisen nahe ihrem unteren Ende eine Stufe 5 auf (Figur 2), mit der sie an einem unteren Ende einer Haltefläche 6 rückspringen. Die Haltefläche 6 ist einem Innern der Behälteraufnahme 2 zugewandt. Die Stufe 5 weist eine in Seitenansicht dreiecksförmige Sicke 7 auf, deren Kante eine Schneide eines Schneidenlagers bildet. Die Kante der Sicke 7 definiert eine Schwenkachse des Schneidenlagers, sie befindet sich nahezu in einer Ebene mit der Haltefläche 6 und ist nur wenig gegenüber einer Innenfläche 8 der Wand 3 der Behälteraufnahme 2 nach außen versetzt. Die die Schwenkachse definierende Kante oder Schneide der Sicke 7 befindet sich jedenfalls innerhalb der Wand 3 der Behälteraufnahme 2. Die Schwenkachse verläuft tangential zur Behälteraufnahme 2.

Die Sicke 7 der Haltebacke 4 sitzt auf einer Stirnfläche an einem freien Stirnende einer Federlasche 9 auf, die von unten in die Aussparung für die Haltebacke 4 in der Wand 3 der Behälteraufnahme 2 ragt. Die Federlasche 9 ist nicht geschnitten gezeichnet. Die Federlasche 9 befindet sich in einer Ebene mit der Wand 3. Die Sicke 7 an der Unterseite der Stufe 5 der Haltebacke 3, und die Stirnfläche bzw. das freie Stirnende der Federlasche 9, auf der die Sicke 7 linienförmig aufsitzt, bilden ein Schneidenlager, um das die Haltebacke 4 schwenkbar ist.

Eine Doppelschenkelfeder 10, die in Figur 6 als Einzelteil dargestellt ist, bildet ein Federelement, das die Haltebacke 4, wie in Figur 2 zu sehen, in die Behälteraufnahme 2 hinein beaufschlagt. Beim Einstellen stößt ein nicht dargestellter Getränkebehälter von oben gegen die Haltebacke 4 und übt auf diese ein nach außen gerichtetes Moment aus, das die Haltebacke 4 gegen eine Federkraft der Doppelschenkelfeder 10 nach außen schwenkt. Das nach außen gerichtete Moment, das der Getränkebehälter beim Einstellen auf die Haltebacke 4 ausübt, ist umso größer je weiter sich die Schwenkachse des Schneidenlagers, also die Kante der Sicke 7, innen, also nahe der Innenseite der Wand 3, befindet.

Die Doppelschenkelfeder 10 stützt sich unterhalb der Haltebacke 4 außen an der Wand 3 ab und drückt die Haltebacke 4 wie bereits gesagt nach innen in die Behälteraufnahme 2. Federwicklungen 11 der Doppelschenkelfeder 10 sind auf zur Seite stehende Laschen 12 auf einer der Behälteraufnahme 2 abgewandten Außen- oder Rückseite der Haltebacke 4 aufgesetzt (Figur 4). Auf diese Weise ist die Doppelschenkelfeder 10 an der Haltebacke 4 befestigt, die Doppelschenkelfeder 10 bildet mit der Haltebacke 4 eine vormontierbare bzw. vormontierte Baugruppe wie in Figur 4 zu sehen.

Die Haltebacke 4 weist gleichachsig auf beiden Seiten nach außen stehende Zapfen 13 auf. Die Zapfen 13 werden an der Behälteraufnahme 2 abgewandten Außenseiten von Rippen 14 übergriffen, die einstückig mit der Wand 3 der Behälteraufnahme 2 sind. Die Rippen 14 sind beiderseits der Haltebacke 4 angeordnet und verlaufen in Längsrichtung der Behälteraufnahme 2. An ihren unteren Enden sind die Rippen 14 an ihrem der Wand 3 zugewandten Fuß ausgespart, die Aussparungen bilden unten offene Aufnahmen 15 für die Zapfen 13 der Haltebacke 4. Zur Montage wird die Haltebacke 4 von unten auf der Außenseite der Wand der Behälteraufnahme 2 entlang in die Aussparung der Wand 3 bewegt. Dabei drückt die Haltefläche 6 die Federlasche 9 elastisch nach innen, bis die Stufe 5 der Haltebacke 4 an der Federlasche 9 vorbei tritt. Die Federlasche 9 schnappt zurück, so dass die Teil des Schneidenlagers bildende Sicke 7 an der Unterseite der Stufe 5 auf der Stirnfläche der Federlasche 9 aufsitzt. Die Rippen 14 übergreifen wie bereits gesagt die Zapfen 13 der Haltebacke 4 auf deren Außenseiten und sichern dadurch die Haltebacke 4 in der Aussparung in der Wand 3 und auch den Zusammenhalt des Schneidenlagers, also den Sitz der Sicke 7 auf der Stirnfläche der Federlasche 9. Die Doppelschenkelfeder 10 befindet sich bei der Montage bereits auf der Haltebacke 4 und muss nicht separat montiert werden. Da die Montage wie beschrieben von unten entlang der Außenseite der Wand 3 der Behälteraufnahme 2 erfolgt, ist die Montage der Haltebacke 4 auch dann möglich, wenn der Halter 1 doppelwandig und die Wand 3 von außen nicht zugänglich ist. Das ist beispielsweise der Fall, wenn die Wand 3 von einer Außenwand umschlossen ist (nicht dargestellt) oder der Halter 1 eine Blende 16 auf einer Außenseite der Behälteraufnahmen 2 aufweist, wie es in Figur 1 zu sehen ist. Im Bereich der Blende 16 ist der Halter 1 doppelwandig.

### Bezugszeichenliste

### Halter für einen Getränkebehälter

- 1: Halter
- 2: Behälteraufnahme
- 3: Wand
- 4: Haltebacke
- 5: Stufe
- 6: Haltefläche
- 7: Sicke
- 8: Innenseite
- 9: Federlasche
- 10: Doppelschenkelfeder
- 11: Federwicklung
- 12: Lasche
- 13: Zapfen
- 14: Rippe
- 15: Aufnahme

## Patentansprüche

1. Halter für einen Getränkebehälter, mit einer Behälteraufnahme (2) zum Einstellen des Getränkebehälters, mit einer Haltebacke (4), die mit einer Schwenklagerung ein Stück weit in die Behälteraufnahme (2) hinein schwenkbar gelagert ist, und mit einem Federelement (10), das die Haltebacke (4) In die Behälteraufnahme (2) hinein beaufschlagt, wobei die Schwenklagerung ein Schneidenlager (7) zur schwenkbaren Lagerung der Haltebacke (4) aufweist **dadurch gekennzeichnet, dass** der Halter eine Lasche (9) aufweist, an deren freiem Stirnende sich das Schneidenlager (7) befindet.

2. Halter nach Anspruch 1, **dadurch gekennzeichnet, dass** die Haltebacke (4) eine Stufe (5) aufweist, mit der die Haltebacke (4) schwenkbar auf dem freien Stirnende der Lasche (9) aufsitzt.

3. Halter nach Anspruch 1, **dadurch gekennzeichnet, dass** die Schwenkachse des Schneidenlagers (7) sich in einer Wand (3) der Behälteraufnahme (2) befindet.

4. Halter nach Anspruch 1, **dadurch gekennzeichnet, dass** die Schwenkachse des Schneidenlagers (7) tangential zur Behälteraufnahme (2) verläuft.

5. Halter nach Anspruch 2, **dadurch gekennzeichnet, dass** der Halter (1) eine unten offene Aufnahme (15) für die Haltebacke (4) auf einer Außenseite der Behälteraufnahme (2) aufweist, die die Haltebacke (4) auf einer Außenseite übergreift und die Stufe (5) der Haltebacke (4) schwenkbar auf dem freien Stirnende der Lasche (9) aufsitzend hält.

6. Halter nach Anspruch 5, **dadurch gekennzeichnet, dass** die Aufnahme (15) für die Haltebacke (4) und die Lasche (9) einstückige Bestandteile der Behälteraufnahme (2) sind und dass die Lasche (9) eine Federlasche ist, die bei der Montage der Haltebacke (4) an der Stufe (5) der Haltebacke (4) einschnappt.

7. Halter nach Anspruch 1, **dadurch gekennzeichnet, dass** die Haltebacke (4) und das Federelement (10) eine vormontierbare Baugruppe bilden.

## Claims

1. Holder for a drinks container, having a container receptacle (2) for insertion of the drinks container, having a holding jaw (4) which is mounted by means of a pivot bearing so as to be pivotable a short distance into the container receptacle (2), and having a spring element (10) which urges the holding jaw (4) into the container receptacle (2), the pivot bearing having a knife-edge bearing (7) for the pivotal mounting of the holding jaw (4), **characterized in that** the holder has a tongue (9) on the free end of which the knife-edge bearing (7) is located.

2. Holder according to claim 1, **characterized in that** the holding jaw (4) has a step (5) by means of which the holding jaw (4) is pivotally seated on the free end of the tongue (9).

3. Holder according to claim 1, **characterized in that** the pivot axis of the knife-edge bearing (7) is located in a wall (3) of the container receptacle (2).

4. Holder according to claim 1, **characterized in that** the pivot axis of the knife-edge bearing (7) runs tangentially with respect to the container receptacle (2).

5. Holder according to claim 2, **characterized in that** the holder (1) has on the outer side of the container receptacle (2) a seating (15) for the holding jaw (4), which seating is open at the bottom and engages over the holding jaw (4) on the outer side and holds the step (5) of the holding jaw (4) seated pivotally on the free end of the tongue (9).

6. Holder according to claim 5, **characterized in that** the seating (15) for the holding jaw (4) and the tongue (9) are integral components of the container receptacle (2), and the tongue (9) is a spring tongue which, on mounting of the holding jaw (4), snaps into place on the step (5) of the holding jaw (4).

7. Holder according to claim 1, **characterized in that** the holding jaw (4) and the spring element (10) form a pre-mountable structural unit.

## Revendications

1. Support pour un récipient à boissons, avec un réceptacle de récipient (2) pour y mettre en place le récipient à boissons, avec une mâchoire de retenue (4) qui, au moyen d'un ensemble de palier de pivotement, est monté en pouvant pivoter sur une petite distance à l'intérieur du réceptacle de récipient (2), et avec un élément formant ressort (10) qui contraint la mâchoire de retenue (4) vers l'intérieur du réceptacle de récipient (2), sachant que l'ensemble de palier de pivotement présente un palier en arête de couteau (7) pour le montage à pivotement de la mâchoire de retenue (4), **caractérisé en ce que** le support présente une patte (9) à l'extrémité frontale libre de laquelle se trouve le palier en arête de couteau (7).

2. Support selon la revendication 1, **caractérisé en ce que** la mâchoire de retenue (4) présente un gradin (5) par lequel la mâchoire de retenue (4) repose à pivotement sur l'extrémité frontale libre de la patte (9).

3. Support selon la revendication 1, **caractérisé en ce que** l'axe de pivotement du palier en arête de couteau (7) se trouve dans une paroi (3) du réceptacle de récipient (2).

4. Support selon la revendication 1, **caractérisé en ce que** l'axe de pivotement du palier en arête de couteau (7) s'étend tangentiellement au réceptacle de récipient (2).

5. Support selon la revendication 2, **caractérisé en ce que** le support (1) présente un logement (15) ouvert vers le bas pour la mâchoire de retenue (4) sur un côté extérieur du réceptacle de récipient (2), logement qui engage en recouvrement la mâchoire de retenue (4) sur un côté extérieur et qui maintient le gradin (5) de la mâchoire de retenue (4) reposant à pivotement sur l'extrémité frontale libre de la patte (9).

6. Support selon la revendication 5, **caractérisé en ce que** le logement (15) pour la mâchoire de retenue (4) et la patte (9) sont des parties intégrantes d'un seul tenant du réceptacle de récipient (2), et **en ce que** la patte (9) est une patte élastique qui, lors du montage de la mâchoire de retenue (4), s'enclenche sur le gradin (5) de la mâchoire de retenue (4).

7. Support selon la revendication 1, **caractérisé en ce que** la mâchoire de retenue (4) et l'élément formant ressort (10) forment une unité structurelle pouvant être préassemblée.
